# EUROPEAN PATENT SPECIFICATION

(11) **EP 1 193 904 B1**
(45) Date of publication and mention of the grant of the patent: **31.10.2007**
(21) Application number: 01117538.7
(22) Date of filing: 20.07.2001
(51) Int. Cl.: H04L 9/06, H04L 1/00

(54) **Transmission method to assure data confidentiality.**
Übertragungsverfahren zur Gewährleistung der Datenvertraulichkeit
Procédé de transmission assurant la confidentialité des données

(30) Priority: 11.08.2000 IT VA000030
(43) Date of publication of application: 03.04.2002
(73) Proprietor: Siemens S.p.A., 20126 Milano (IT)
(72) Inventor: Santacesaria, Claudio, 20139 Milano (IT)
(74) Representative: Giustini, Delio

(56) References cited:
- EP-A- 0 448 534
- EP-A- 0 924 890
- WO-A-98/58496
- WO-A-99/33191
- US-A- 5 420 883
- FERNANDEZ-GONZALEZ J ET AL: "ENCRYPTION AND ERROR CORRECTION CODES FOR RELIABLE FILE STORAGE" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, vol. 12, no. 5, 1 August 1993 (1993-08-01), pages 501-510, XP000398173 ISSN: 0167-4048

## Description

### FIELD OF THE INVENTION

The present invention finds particular application in radio transmission systems of the point-to-point or point-multipoint type, but also in other transmission fields on different physical means, such as optical fiber, coaxial cable and copper twisted pair.

### BACKGROUND OF THE INVENTION

Symmetric key ciphering systems are generally used for data ciphering in telecommunication systems while the authentication and support tasks for the safe exchange of the keys to be used in the symmetric key ciphering are assigned to asymmetric ciphering systems.

The available symmetric key ciphering systems are:
- Of the block type (block cipher)
- Of the stream type (stream cipher)

For instance, the DES (Data Encryption Standard) method, in its basic mode, belongs to the first class, while the DES in OFB (Output Feedback) mode belongs to the second one.

To increase the security, the block ciphers are often used in a mode called CBC (Cipher Block Chaining), consisting in the chaining of subsequent blocks according to what described below.

Assuming to cipher the block sequence M_1, M_2 etc., denoted E the ciphering function, IV an arbitrary initialization vector of the same size of a data block and C_1, C_2 etc. the corresponding ciphered blocks, the chaining occurs as follows using the bit XOR logic function of the blocks.
C_1= E(M_1 XOR IV);
C_2 = E(M_2 XOR C_1);
....
C_6=E(M_6XORC_5).

In reception, deciphering takes place with the D function, used as follows:
M_1 = D(C_1) XOR IV;
M_2 = D(C_2) XOR C_1;
M_3 = D(C_3) XOR C_2;
....
M_6 = D(C_6) XOR C_5.

Stream ciphers have the drawback that they require the synchronisation of the transmitting station and of the receiving one at cryptographic function level, that is, the statuses of the corresponding functions in the two stations must be aligned. In case of misalignment, large quantities of traffic are lost.

On the contrary, the block cipher multiplies transmission errors inside the block and, in the case of CBC mode, also in the next block. That is, the wrong reception of a sole bit of C_2 for instance, causes the whole corruption of M_2 and M_3.

### OBJECT AND SUMMARY OF THE INVENTION

In transmission systems equipped with forward error correction code (FEC) and ciphering, ignoring the interaction between FEC and ciphering in terms of correction of the channel errors, can lead to the problems indicated in the previous paragraph; that is the selection of codes of the stream cipher type requires a synchronisation mechanism of the statuses that must be robust to avoid the misalignment with subsequent loss of whole portions of traffic, while the selection of codes of the block cipher type can lead to error propagation, considerably worsening the system performances versus those of the system without cryptography.

The article of J. Fernandez-Gonzales, G. B. Agnew, and A. Ribagorda, titled: "Encryption and error correction codes for reliable file storage", published by Elsevier Science Publisher Ltd, Amsterdam ND, on Computer & Security Journal, 1 August 1993, vol. 12, pages 501-510, XP000398173 ISSN: 0167-4048, addresses the problem of counteracting error propagation in block cipher type. A cryptosystem model is proposed to this aim. On the transmission branch the model includes the following functional blocks: pre-encryption coder, interleaver, encryption device, and channel coder; while on the reception branch it includes: channel decoder, decryption device, de-interleaver, and post-decryption decoder. The assessment of a lot of parameters indicated as *L, M, R, J, I, S, α, β, i, H, d* is needed for a correct operation. Due to its complication, a low-cost implementation of such Cryptosystem model would be very hard.

On the contrary, according to the present invention, which is described in the appended claims a traditional block cipher, with CBC chaining, is aligned to the block coded with the FEC, thus cancelling the negative effects of error propagation. The correct positioning of the ciphering functionality before the insertion of the FEC coding in transmission and of the deciphering function after FEC decoding in reception enables to obtain the maximum advantages.

A novel aspect of the invention is the insertion of an integer number (one or more) of ciphered blocks in a FEC block. Optionally, the error correction coding can be also made on an integer number of ciphered blocks and on blocks of additional non-ciphered bits.

The CBC is re-initialized with an initialization vector at least coinciding with any new FEC block.

### BRIEF DESCRIPTION OF DRAWINGS

The invention, together with further objects and advantages thereof, may be understood from the following detailed description, taken in conjunction with the accompanying drawings, in which:

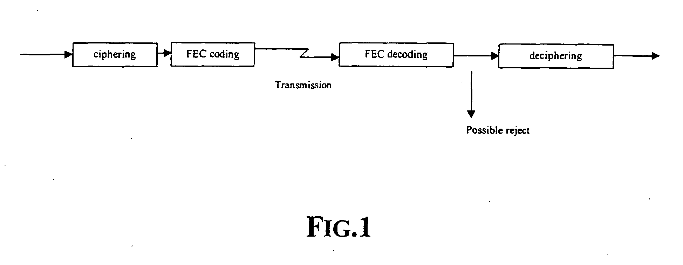

**Figure 1** shows the correct positioning of logic blocks in the transmission chain.

### DESCRIPTION OF AN EMBODIMENT OF THE INVENTION

To describe the invention more in detail, it is considered the case of significant interest, in which the error correction code is a Reed Solomon while the ciphering is obtained by DES method with CBC mode. It is assumed that the information to cipher and protect is organized in 48-byte blocks, equal to the length of the payload of an ATM (Asynchronous Transfer Mode) cell. Of course, the invention can be conveniently applied also to codes, ciphering and blocks different from the mentioned ones.

In transmission (figure 1), it is identified a basic information block having fixed dimension, that we shall consider 48 byte long, without reducing for this reason the generality of the invention. This block is ciphered with the DES CBC, chaining 6 DES blocks according to the CBC mode and initializing the CBC with an initialization vector before the first one of said 6 blocks. The initialization vector can always be the same or different any time, provided that its value in the first case or the sequence of values in the second case are known both to the transmitter and to the receiver.

Essential element of this particular embodiment is the re-initialization of the CBC chaining with the initialization vector at each block.

This ciphering operation produces a 48 byte ciphered block.

One or more of said ciphered blocks are then sent, possibly together with other non-ciphered information, to the FEC encoder which adds the appropriate redundancy for the correction of the channel errors in the receiver and the ciphered and coded blocks so obtained are transmitted to the receiver. The receiver performs the FEC decoding as first operation, to correct the channel errors on each one of said ciphered and coded blocks.

If this operation is successful, the receiver holds the original ciphered blocks and can send them to the deciphering function without any error propagation risk. If the operation fails and the code detects it, the whole ciphered and coded block, which cannot be corrected through the FEC, is rejected and therefore the deciphering function, also in this case, does not receive wrong data and therefore there is no risk for error propagation.

In the remote possibility that a channel error could not be corrected by the FEC and it is not even detected, the FEC itself shall introduce a multiplication of the errors of the ciphered blocks such that the subsequent error multiplication due to deciphering of wrong blocks shall be negligible and therefore it does not worsen the performance versus the system without ciphering.

Being the CBC re-initialized at each block, errors never propagate beyond the block boundary, giving this system the best performance and robustness characteristics compared to the systems of the known art described above.
While a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

## Claims

1. Data transmission method from a transmitting station to a receiving station suitable to protect the confidentiality of data and the robustness of transmission, including the step of:
at the transmitting station
a) ciphering data to transmit according to the Cipher Block Chaining method, called CBC, said block cipherin being aligned to the block to be coded with an error correction coding (FEC);
b) error correction coding (FEC) said ciphered blocks, producing coded ciphered blocks;
at the receiving station
c) decoding said coded ciphered blocks with the error correction code, producing decoded ciphered blocks;
d) deciphering the decoded ciphered blocks with the deciphering corresponding to said CBC method,
**characterized in that**:
- at the transmitting station said CBC chaining is re-initialized at the starting of any new block to be coded with said error correction coding (FEC) using an initialization vector known both at the transmitting station and at the receiving station.

2. The method of claim 1 in which the re-initialization of the CBC chaining always occurs employing a same initialization vector.

3. The method of claim 1 or 2, in which said error correction coding is made on an integer number of ciphered blocks.

4. The method of claim 3, in which said error correction coding also includes blocks of additional non-ciphered bits.

5. The method of any claim from 1 to 4, in which said block-ciphering algorithm is Data Encryption Standard, called DES.

6. The method of claim 5, in which said block-ciphering algorithm is triple DES.

7. The method of any claim from 1 to 6, in which said error correction code is Reed Solomon.

8. The method of claim 7, in which said Reed Solomon code is concatenated with an inner convolutional code.

## Patentansprüche

1. Verfahren zum Übertragen von Daten von einer sendenden Station an eine empfangende Station, welches geeignet ist, die Vertraulichkeit der Daten und die Robustheit der Übertragung zu gewährleisten und die folgenden Schritte umfasst:
An der sendenden Station
a) Verschlüsselung der zu übertragenden Daten nach dem Geheimtextblockverkettungs (Cipher Block Chaining) -Verfahren, kurz CBC genannt, wobei die besagte Blockverschlüsselung an dem Block ausgerichtet ist, der mit einer Fehlerkorrekturcodierung (Error Correction Coding, FEC) codiert werden soll;
b) Fehlerkorrekturcodierung (FEC) der besagten verschlüsselten Blöcke, sodass codierte verschlüsselte Blöcke erzeugt werden;
An der empfangenden Station
c) Decodierung der besagten codierten verschlüsselten Blöcke mit dem Fehlerkorrekturcode, sodass decodierte verschlüsselte Blöcke entstehen;
d) Entschlüsselung der decodierten verschlüsselten Blöcke mit der Entschlüsselung, die dem besagten CBC-Verfahren entspricht,
**dadurch gekennzeichnet, dass**:
- an der sendenden Station die besagte CBC-Verkettung am Beginn jedes neuen mit der besagten Fehlerkorrekturcodierung (FEC) zu codierenden Blocks erneut initialisiert wird, wozu ein Initialisierungsvektor verwendet wird, der sowohl an der sendenden Station als auch an der empfangenden Station bekannt ist.

2. Verfahren gemäß Anspruch 1, bei dem die erneute Initialisierung der CBC-Verkettung stets unter Verwendung desselben Initialisierungsvektors erfolgt.

3. Verfahren gemäß Anspruch 1 oder 2, bei dem die besagte Fehlerkorrekturcodierung an einer ganzzahligen Anzahl von verschlüsselten Blöcken durchgeführt wird.

4. Verfahren gemäß Anspruch 3, bei dem die besagte Fehlerkorrekturcodierung außerdem Blöcke mit zusätzlichen, nicht verschlüsselten Bits beinhaltet.

5. Verfahren gemäß einem der Ansprüche 1 bis 4, bei dem der besagte Blockverschlüsselungsalgorithmus der Data Encryption Standard, genannt DES, ist.

6. Verfahren gemäß Anspruch 5, bei dem der besagte Blockverschlüsselungsalgorithmus der Triple-DES ist.

7. Verfahren gemäß Anspruch 1 bis 6, bei dem der besagte Fehlerkorrekturcode Reed Solomon ist.

8. Verfahren gemäß Anspruch 7, bei dem der besagte Reed-Solomon-Code mit einem inneren Faltungscode verkettet ist.

## Revendications

1. Procédé de transmission de données d'une station émettrice à une station réceptrice approprié pour protéger la confidentialité de données et la robustesse de la transmission, incluant l'étape de :
à la station émettrice
a) chiffrage des données à transmettre selon le procédé de Chaînage de Blocs Chiffrés, appelé CBC, ledit chiffrage de blocs étant aligné sur le bloc devant être codé avec un codage de correction d'erreurs (FEC) ;
b) codage de correction d'erreurs (FEC) desdits blocs chiffrés, produisant des blocs chiffrés codés;
à la station réceptrice
c) décodage desdits blocs chiffrés codés avec le code de correction d'erreurs, produisant des blocs chiffrés décodés ;
d) déchiffrage des blocs chiffrés décodés avec le déchiffrage correspondant audit procédé CBC,
**caractérisé en ce que** :
- à la station émettrice ledit chaînage CBC est réinitialisé au début d'un quelconque nouveau bloc devant être codé avec ledit codage de correction d'erreurs (FEC) par l'utilisation d'un vecteur d'initialisation connu à la fois à la station émettrice et à la station réceptrice.

2. Procédé selon la revendication 1, dans lequel la réinitialisation du chaînage CBC se fait toujours par le fait d'employer un même vecteur d'initialisation.

3. Procédé selon la revendication 1 ou 2, dans lequel ledit codage de correction d'erreurs est effectué sur un nombre entier de blocs chiffrés.

4. Procédé selon la revendication 3, dans lequel ledit codage de correction d'erreurs inclut également des blocs de bits additionnels non chiffrés.

5. Procédé selon l'une quelconque des revendications 1 à 4, dans lequel ledit algorithme de chiffrage de blocs est la Norme de Cryptage de Données, appelée DES.

6. Procédé selon la revendication 5, dans lequel ledit algorithme de chiffrage de blocs est la triple DES.

7. Procédé selon l'une quelconque des revendications 1 à 6, dans lequel ledit code de correction d'erreurs est le Reed Solomon.

8. Procédé selon la revendication 7, dans lequel ledit code de Reed Solomon est concaténé avec un code convolutionnel interne.
